# DEMANDE DE BREVET EUROPEEN

(11) **EP 1 538 508 A1**
(43) Date de publication de la demande: **08.06.2005**
(21) Numéro de dépôt: 03293035.6
(22) Date de dépôt: 04.12.2003
(51) Int. Cl.: G06F 1/00, H04L 29/06

(54) **Procédé et dispositif de chiffrement et dechiffrement à la volée**

(71) Demandeur: Axalto S.A., 92120 Montrouge (FR)
(72) Inventeur: Pepin, Cyrille, 78431 Louveciennes Cédex (FR); Rainsard, Stéphane, 78431 Louveciennes Cédex (FR)
(74) Mandataire: Renault, Patricia Marie Jacqueline

(57) **Abrégé**

La présente invention concerne un procédé de sécurisation de données transmises à un ensemble électronique sous forme chiffrée en plusieurs étapes sous forme de blocs. Le procédé consiste, lorsque ledit ensemble reçoit un bloc, à déchiffrer le bloc reçu, à traiter les informations contenues dans ledit bloc et à chiffrer les informations traitées.

## Description

### DOMAINE TECHNIQUE

La présente invention concerne un procédé et un dispositif de sécurisation d'un ensemble électronique mettant en oeuvre un programme utilisant des données confidentielles à protéger. Plus précisément, le procédé vise à proposer une parade visant à protéger lesdites données lors d'opérations sensibles effectuées en plusieurs étapes. Le découpage en étapes successives d'opérations sensibles peut rendre lesdites données vulnérables à certaines attaques. On entend par attaque tout moyen ou dispositif permettant de récupérer les données entre chaque opération en modifiant l'exécution (inexécution ou mauvaise exécution) de tout ou partie du programme par exemple.

Un problème posé par la présente invention est la vulnérabilité des données confidentielles susceptibles d'être retrouvées par des attaques sur l'ensemble électronique les manipulant.

Un autre problème posé est la réception desdites données en plusieurs étapes. A chaque étape est transmis à l'ensemble électronique tout ou partie desdites données, ce qui accroît leur vulnérabilité.

La présente invention a pour but de minimiser la vulnérabilité des données traitées dans un ensemble électronique.

La mise en place de tel mécanisme de sécurisation a des coûts divers (temps, importance et/ou lourdeur du mécanisme... ). La présente invention a pour but d'offrir une solution sure et peu coûteuse.

### RESUME DE L'INVENTION

La présente invention concerne un procédé de sécurisation de données transmises à un ensemble électronique sous forme chiffrée en plusieurs étapes sous forme de blocs caractérisé en ce qu'il consiste, lorsque ledit ensemble reçoit un bloc, à déchiffrer le bloc reçu, à traiter les informations contenues dans ledit bloc et à chiffrer les informations traitées.

La présente invention concerne également un dispositif de sécurisation d'un ensemble électronique, l'ensemble électronique proprement dit et le programme permettant l'exécution des étapes du procédé.

### DESCRIPTION SOMMAIRE DES DESSINS

D'autres buts, avantages et caractéristiques de l'invention apparaîtront à la lecture de la description qui va suivre de la mise en oeuvre du procédé selon l'invention et d'un mode de réalisation d'un système électronique adapté pour cette mise en oeuvre, donnés à titre d'exemple non limitatif en référence aux dessins ci-annexés dans lesquels :
La figure 1 représente un diagramme des différentes étapes d'une forme de réalisation du procédé selon l'invention ;
La figure 2 représente de manière schématique un procédé de traitement normal de données reçues en plusieurs étapes dans un ensemble électronique sans mise en place du dispositif selon la présente invention, l'ensemble ne subissant aucune attaque ;
La figure 3 représente de manière schématique un procédé de traitement normal de données reçues en plusieurs étapes dans un ensemble électronique sans mise en place du dispositif selon la présente invention et en présence d'une attaque ;
La figure 4 représente de manière schématique le procédé de sécurisation selon la présente invention dans un ensemble électronique ne subissant aucune attaque ;
La figure 5 représente de manière schématique le procédé de sécurisation selon la présente invention dans un ensemble électronique subissant une attaque ;
Les figures 6, 7 et 8 font ressortir de manière schématique l'information utile de différents blocs de données susceptibles d'être reçus par un ensemble électronique ;
La figure 9 représente un exemple de données transmis à un ensemble électronique sous forme de blocs ;
Les figures 10 à 12 illustrent de manière schématique selon un exemple de réception de données en trois étapes les différentes phases d'une forme de réalisation du procédé selon la présente invention représenté sur la figure 1 ;
La figure 13 représente un diagramme des différentes étapes d'une autre forme de réalisation du procédé selon l'invention ;
Les figures 14 et 15 illustrent de manière schématique selon un exemple de réception de données dont seulement deux étapes ont été illustrées, les différentes phases de la forme de réalisation du procédé selon la présente invention représenté sur la figure 13.

### MANIERE DE REALISER L'INVENTION

Le procédé selon l'invention vise à sécuriser un système et plus particulièrement un ensemble électronique, et par exemple un objet portable tel qu'une carte à puce qui utilise des données sensibles transmises à l'ensemble en plusieurs étapes sous forme chiffrée. L'ensemble électronique comprend des moyens de traitement d'information tels qu'un processeur et des moyens de stockage d'information tels qu'une mémoire.

A titre d'exemple non limitatif, l'ensemble électronique décrit dans ce qui suit correspond à un objet portable comprenant un module électronique. De tels modules sont réalisés le plus souvent sous la forme d'un microcircuit électronique intégré monolithique, ou puce, qui une fois protégé physiquement par tout moyen connu peut être monté sur un objet portatif tel que par exemple une carte à puce, carte à microcircuit ou autre utilisable dans divers domaines.

Le module électronique à microprocesseur comprend par exemple un microprocesseur CPU relié de façon bidirectionnelle par un bus interne à une mémoire non volatile de type ROM, EEPROM, Flash, FeRam ou autre contenant un programme à exécuter, une mémoire vive de type RAM, des moyens I/O d'entrée/sortie pour communiquer avec l'extérieur.

Selon un exemple de la présente invention, la carte est une carte à puce munie de moyens de traitement de l'information et de mémorisation, incluant un module fonctionnel connu sous l'abréviation "SIM" (pour "Subscriber Identity Module" ou "Module d'identification d'abonné"). La carte SIM communique et échange des données avec son terminal d'accueil, le mobile téléphonique, celui-ci envoyant des commandes entraînant des réponses par la carte SIM. Ces commandes présentent un format spécifique APDU (Application Protocol Data Unit) et permettent entre autre le transfert de données. Les commandes APDU peuvent être des commandes chaînées et transférer les données en plusieurs envois.

Selon un autre exemple, la carte est une carte bancaire et reçoit des commandes APDU chaînées.

La présente invention s'applique à tout type de carte susceptible de recevoir des données sensibles sous forme de commandes chaînées transférées en plusieurs envois.

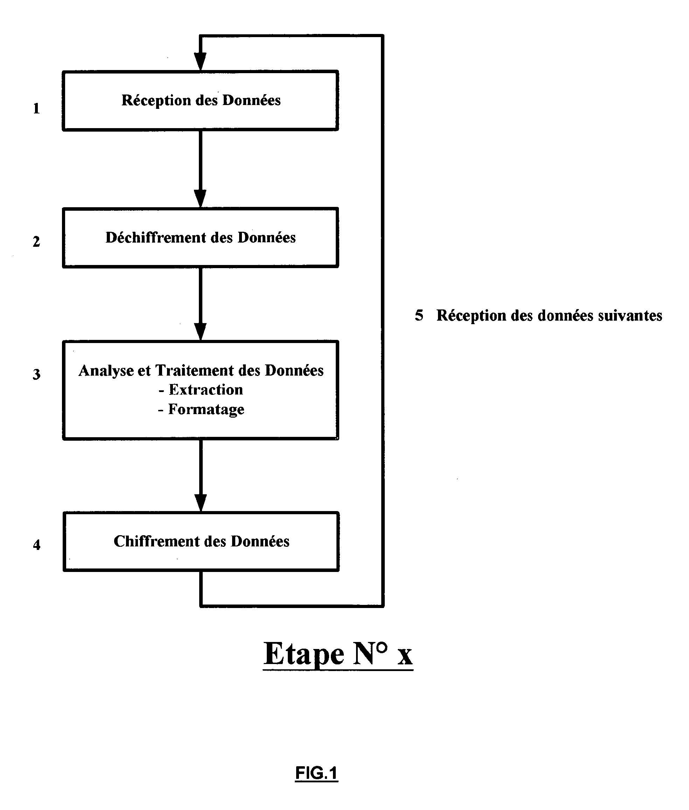

La présente invention s'intéresse à la manipulation de données sensibles telles que par exemple des clés reçues par ledit système en plusieurs fois. Comme le montre la figure 1, la phase 1 du procédé consiste donc en la réception d'une partie de ces données. Le procédé de sécurisation selon la présente invention permet d'assurer la confidentialité de ces données dès leur réception et cela en les chiffrant (phase 4, figure 1) après les avoir déchiffrées (phase 2, figure 1), analysées et traitées (phase 3, figure 1). Les données chiffrées sont adjointes aux données chiffrées du bloc reçu précédent (concaténation des données chiffrées). Selon une forme de réalisation, les données sont déchiffrées, analysées et traitées, chiffrées avant de traiter le bloc suivant reçu.

Les données reçues sont dans un premier temps déchiffrées puis dans un deuxième temps chiffrées en interne dans le dispositif.

Le procédé selon la présente invention consiste à extraire et analyser avant chiffrement, mais dès leur réception, toutes les informations contenues dans les données nécessaires à la suite du traitement et à utiliser les informations extraites pour formater les données sous leur forme finale. Les données reçues sont formatées en vue de leur utilisation ultérieure. Cette sécurisation des données ne doit pas aller à l'encontre de leur simplicité d'utilisation. Il peut s'avérer nécessaire de formater les données avant leur sécurisation. Le formatage pourra par exemple consister en la mise en place d'un padding, l'inversion des données ou encore la suppression d'informations inutiles, ...

Le procédé selon la présente invention permet d'extraire et manipuler les données à chaque étape de réception et ainsi de limiter le temps de traitement et de manipulation des données sensibles.

Selon une des formes de réalisation, les attaques sont rendues plus difficiles du fait que tous les traitements (formatage, chiffrement, ... ) sont effectués avant de recevoir les données suivantes (phase 5). Tout ou partie des données reçues se trouve ainsi protégé avant la suite du processus.

Le chiffrement est une protection complémentaire à une écriture « scramblée ». Certains dispositifs permettent de « scrambler » la mémoire, c'est à dire de la chiffrer. Cependant, cette fonctionnalité ne dispense pas de chiffrer quand même les données stockées en mémoire. En effet, un tel mécanisme (« scramble ») protège les données d'une lecture extérieure mais pas du « détournement » d'une routine de lecture interne. Le chiffrement supplémentaire peut également s'avérer plus robuste.

La totalité des informations nécessaires au traitement des données (au formatage notamment) n'est a priori pas connue. Un certain nombre d'informations devront être extraites « à la volée » lors du traitement. Le chiffrement des données va donc dépendre de l'analyse qui sera faite des données lors de leur réception et lors de leur traitement.

Dans un premier temps, le principe du procédé selon l'invention est décrit pour chaque étape de traitement. Dans un deuxième temps, seront développés et expliqués les mécanismes mis en place, ce qu'ils apportent et ce qui les différencie des mécanismes existants.

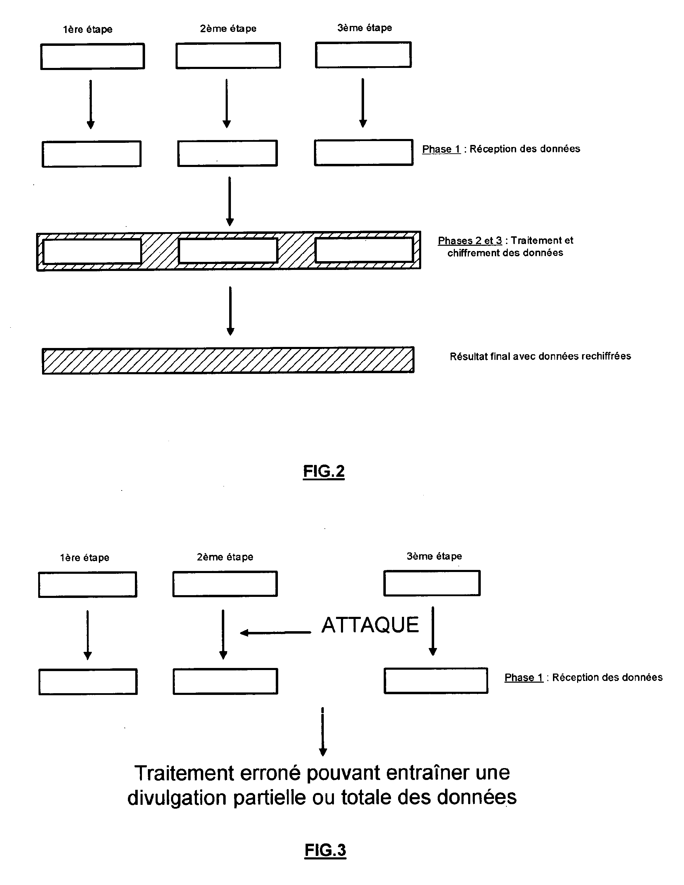

Dans les figures 2 à 5, 9 à 12, 14 et 15, les rectangles de couleur noire désignent des blocs de données reçues et les rectangles hachurées des blocs de données rechiffrées.

Comme le montre la figure 2, les données sont transmises de manière segmentées. A chaque étape (1^{ère}, 2^{ème} et 3^{ème} étapes sur la figure 2), l'ensemble électronique reçoit une partie des données. Le procédé de traitement de données connu dans un ensemble électronique comprend les phases suivantes :
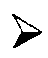 Phase 1 : Réception des données.
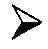 Phase 2 : Traitement des données.
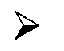 Phase 3 : Chiffrement des données.

La figure 2 met en évidence le fait que le traitement et le chiffrement des données s'effectuent uniquement à la réception de l'ensemble des données, c'est-à-dire à l'issue de la troisième étape de réception des données.

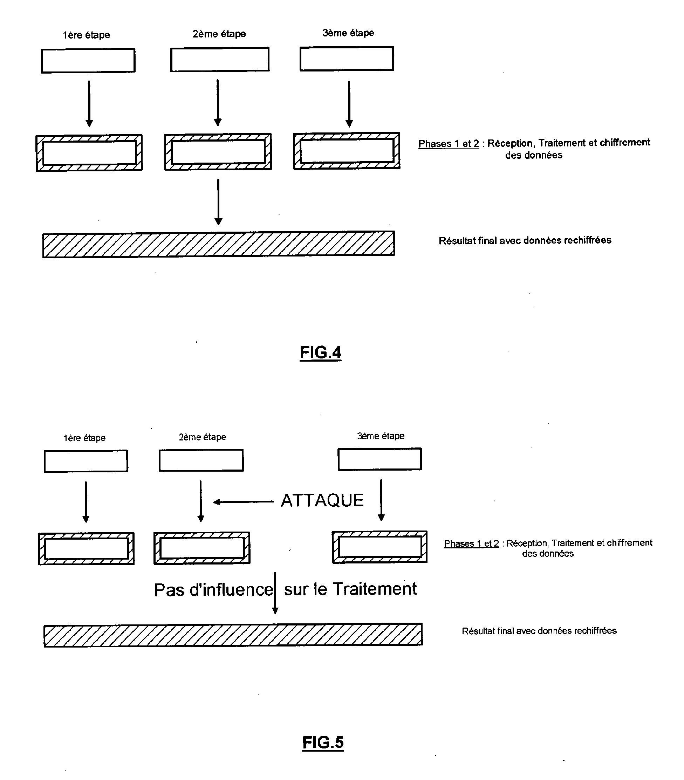

La figure 3 fait ressortir la vulnérabilité des données lors d'une attaque d'un ensemble électronique dépourvu d'un dispositif selon la présente invention.

Chacune des phases se déroule selon le schéma de la figure 2. Cependant, lors de la réception des données durant la 2^{ème} étape, l'ensemble électronique fait l'objet d'une attaque. L'attaque peut entraîner soit un traitement erroné soit une interruption du traitement des données. D'une manière générale, un traitement erroné peut permettre une divulgation partielle ou totale des données lors de ce traitement ou lors de l'utilisation ultérieure des données.

Pour parer à ce problème, l'ensemble électronique est muni d'un dispositif selon la présente invention. Le procédé de traitement des données selon une forme de réalisation de l'invention est représenté sur la figure 4. A chaque étape, dès la réception des données, lesdites données sont traitées (c'est-à-dire, phase d'extraction, formatage, .....) et rechiffrées tout de suite. On a une seule et unique phase qui correspond à tout le mécanisme.

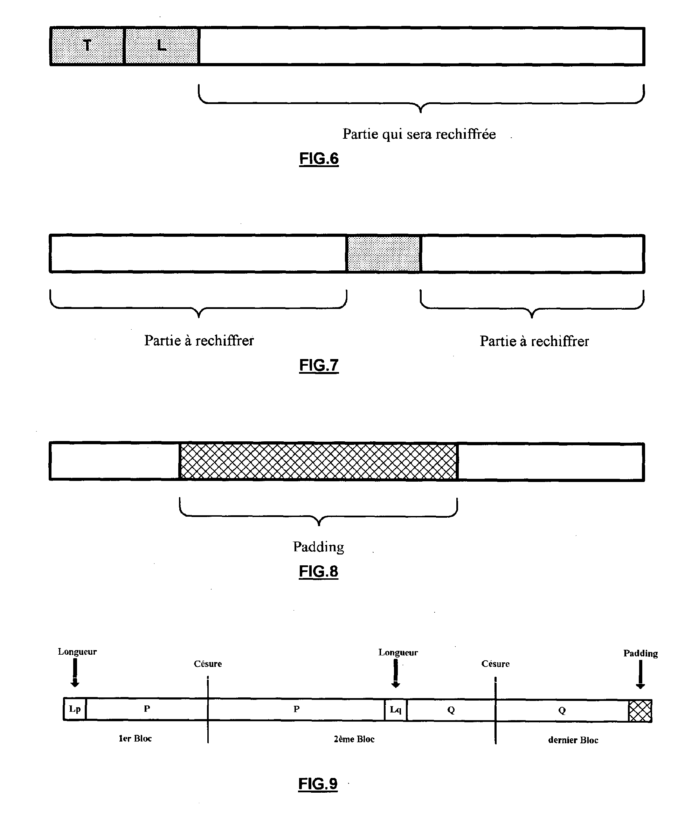

La figure 5 met en évidence les avantages apportées par le procédé selon la présente invention en présence d'une attaque lors de la deuxième étape. L'attaque ne permet par d'obtenir des informations sur les données traitées, car ces données ont été immédiatement rechiffrées dès les première et deuxième étapes. L'attaque n'a pas d'incidence sur le traitement des données et ne nuit pas au bon déroulement de l'application.

De nombreuses contraintes peuvent venir s'ajouter au fait que les données sont reçues par ensembles successifs. Ainsi par exemple, selon l'algorithme utilisé pour le déchiffrement ou le chiffrement, des problèmes supplémentaires viennent s'ajouter.

La description qui suit présente les problèmes rencontrés puis la solution apportée par la présente invention.

Les différents problèmes supplémentaires possibles sont les suivants :
- les données provenant de la réception de groupes de données successifs, par APDU chaîné par exemple, sont segmentées : or la taille de chacun de ces groupes de données ne correspond pas forcément à la taille des blocs traités par l'algorithme de chiffrement utilisé en interne par l'ensemble électronique ;
- certaines données reçues ne seront pas conservées, leur utilité se limitant au formatage de ces données ; selon la présente invention, les informations utiles sont extraites avant de commencer le traitement ;
- le format des données en entrée fait intervenir des longueurs variables ;
- l'implémentation matérielle de tel ou tel mécanisme (le RSA en l'occurrence) peut impliquer des traitement spécifiques ;
- les algorithmes de chiffrement utilisés en interne peuvent requérir le calcul de padding : un padding est un bit ou un ensemble de bits adjoint à un message de manière que le message contienne un multiple constant du nombre de bits requis par un algorithme cryptographique.

Ces points sont décrit plus en détails dans ce qui suit.

Le premier point concerne la segmentation des données reçues imposée par l'algorithme cryptographique utilisé.

Les données reçues sont chiffrées. Le premier traitement de données par l'algorithme de cryptographie que l'on utilise (l'algorithme Triple DES dans l'exemple décrit), nous impose de manipuler des éléments de 8 octets. Or lors de chaque réception de données (réception de commandes chaînées par exemple), les ensembles de données reçues (chaque APDU reçu) comprennent x bloc(s) de 8 octets (x pouvant varier de 0 à 32), ainsi que x octet(s) résiduels. C'est ce découpage en entrée que l'on nomme segmentation ; chaque élément de ce découpage est appelé segment. Cette segmentation n'est pas liée aux étapes mais correspond dans notre exemple à un découpage supplémentaire.

Le deuxième point concerne la présence de données utiles et de données inutiles.

Lors de la réception de chaque bloc de données, ledit bloc est déchiffré puis traité. A l'intérieur de chaque bloc de données, toutes les données ne sont pas forcément utiles. Sont considérées comme inutiles les données qui ne seront pas rechiffrées. A titre d'exemple non limitatif, lors de la réception d'un message chiffré, les parties correspondant à une étiquette (Tag en anglais), à une Longueur, à un en-tête (Header en anglais) et/ou à un Padding sont considérées comme des données inutiles.

Selon un premier exemple illustré sur la figure 6, lors de la réception d'un bloc, les parties correspondant respectivement au Tag (T) et à la Longueur (L) ne sont pas considérées comme des données utiles. Lors du chiffrement, ces données ne sont pas prises en compte selon la présente invention.

Selon un deuxième exemple illustré sur la figure 7, lors de la réception de commande chaînée, une partie « inutile » peut apparaître au milieu d'un bloc. Lors du chiffrement, cette partie n'est pas prise en compte selon la présente invention.

Selon un troisième exemple représenté sur la figure 8, lors de la réception de données, il peut y avoir parmi celles-ci des parties dites de padding, (par exemple pour que le nombre d'octets de données soit multiple de 8). Le padding peut se trouver au milieu des données mais de manière plus générale en fin de données (possibilité de combinaison des deux types de padding). Lors du chiffrement, le padding n'est pas pris en compte selon la présente invention.

Le troisième point concerne les tailles variables des données reçues.

Lors de réception(s) de blocs, on ne connaît pas forcément la longueur des données à déchiffrer ainsi que celle des données qu'il faut chiffrer. Dans le cas d'une clé par exemple, on va pouvoir connaître la longueur totale des données mais pas la longueur de chaque élément composant la clé (P, Q, dP, dQ et PQ).

Le quatrième point concerne l'implémentation matérielle en question qui entraîne des traitements particuliers.

L'implémentation matérielle de l'algorithme RSA utilisé peut imposer d'inverser le poids fort (PF) avec le poids faible (pf) lors du chiffrement des données. Ce traitement intervient avant chiffrement des données.

Le cinquième point pose le problème des paddings. Il peut être nécessaire de calculer un padding à adjoindre aux données reçues avant de les rechiffrer compte-tenu de l'algorithme de chiffrement utilisé.

En conclusion, tous ces problèmes et contraintes se combinent les uns aux autres. Ils entraînent des manipulations coûteuses en temps, en code et en espace mémoire. De plus, les données qui sont déchiffrées puis chiffrées de nouveau doivent rester en clair le moins longtemps possible afin d'être le moins sensible aux attaques.

Le problème posé est d'être capable de gérer et de diminuer les contraintes explicitées précédemment afin d'optimiser le temps de traitement des données sensibles et de sécuriser les mécanismes mis en place.

La description qui suit décrit le procédé selon la présente invention selon une première forme de réalisation.

Comme représenté sur la figure 9, la réception des données se fait sous la forme de segments (dans l'exemple illustré, trois segments) séparée par une césure. Les segments ont des tailles variables et sont composés de données « utiles » et « inutiles ». Les données inutiles sont dans le cas présent la Longueur et le Padding. On appelle bloc, l'ensemble des données reçues à chaque étape.

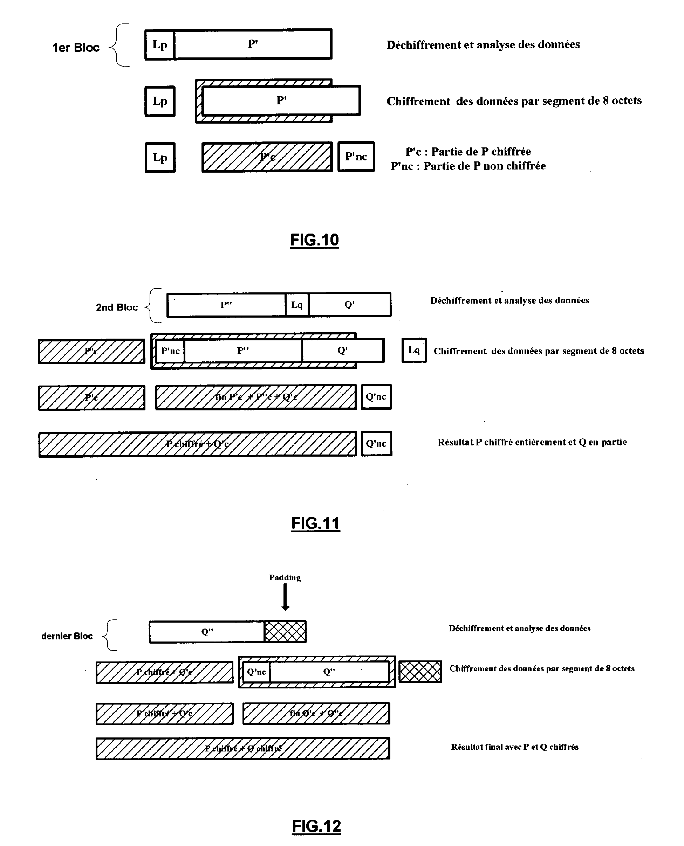

Selon le procédé de la présente invention et comme illustré sur la figure 10, lorsque le premier bloc est reçu, les données sont déchiffrées et analysées. La longueur Lp représentant des données inutiles est extraite de l'ensemble. Les données utiles en résultant sont chiffrées par segment de 8 octets (P'c), cette segmentation étant imposée par l'algorithme de chiffrement utilisé dans le présent exemple. Il en résulte un ensemble P'nc de moins de 8 octets ne pouvant donc pas constituer un segment de 8 octets nécessaire au chiffrement.

A la fin de la première étape, le traitement du premier bloc aboutit à une longueur Lp extraite et non chiffrée, à un ensemble de segments de 8 octets P'c chiffré et à un ensemble de moins de 8 octets non chiffré P'nc.

La réception et le traitement du second bloc est représenté sur la figure 11. Le second bloc comme vu précédemment est constitué d'un ensemble de bits P" et d'un autre ensemble Q' séparé par une longueur Lq. Selon le procédé de l'invention, les données sont donc déchiffrées. Suite à l'analyse des données, la longueur Lq est extraite du bloc déchiffré reçu. Les données en résultant auxquelles est adjoint l'ensemble P'nc de l'étape précédente est chiffré par segment de 8 octets. Il reste un ensemble de moins de 8 octets Q'nc qui n'est pas chiffré comme dans la première étape. L'ensemble chiffré calculé est adjoint à l'ensemble P'c chiffré de la première étape.

La figure 12 illustre la troisième et dernière étape, la réception et le traitement du dernier segment. Le procédé se déroule de la même façon. Les données inutiles extraites sont dans ce cas le padding. L'ensemble des données reçues auxquelles est adjoint la partie Q'nc non chiffré de la deuxième étape constitue un ensemble de segments de 8 octets. Le résultat final représente donc le chiffrement de P et Q. Ce chiffrement s'est fait au fur et à mesure de la réception des données sans attendre l'ensemble des données P et Q pour les chiffrer d'un seul tenant.

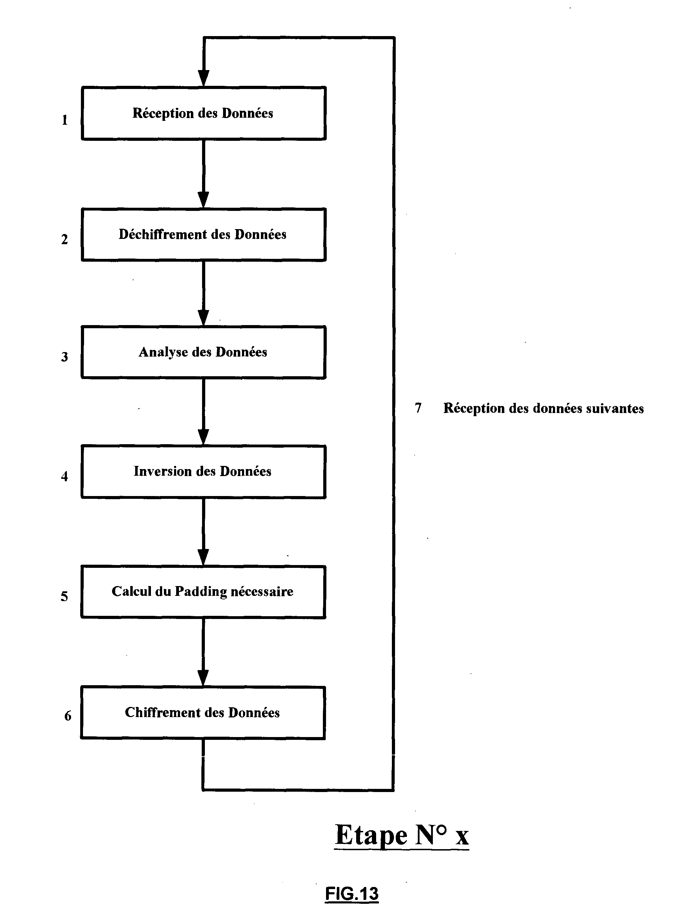

Les figures 13 à 15 représentent les différentes étapes du procédé selon l'invention selon une autre forme de réalisation.

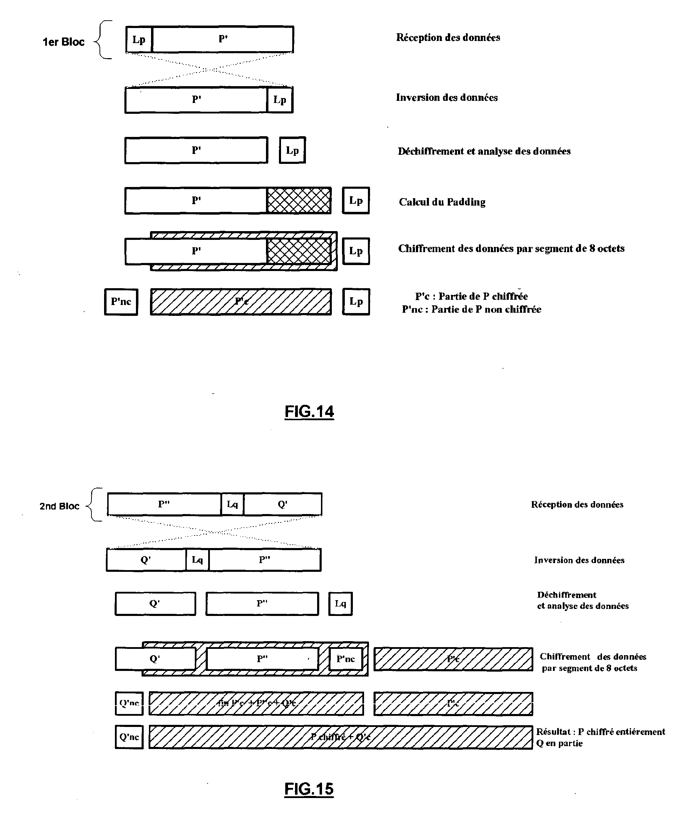

Le procédé comprend les mêmes étapes que dans la précédente forme de réalisation et des étapes supplémentaires d'inversion de données et de calcul de padding comme l'illustre le diagramme de la figure 13. Ainsi, comme représenté sur les figures 14 et 15, à chaque réception de bloc, lors du traitement des données, les données sont inversées avant le déchiffrement compte-tenu de l'algorithme de cryptographie utilisé. Les données étant inversées, elles sont traitées de la droite vers la gauche et il faudra également calculer, si cela est nécessaire, un padding. Ainsi si par exemple la longueur des données P reçues, soit Lp, est de 18 octets et que l'algorithme utilisé par l'objet portable nécessite la manipulation de données dont la taille en nombre d'octets est un multiple de 8, le procédé selon l'invention prévoit un padding de 6 octets pour obtenir trois parties de 8 octets. Comme le montre la figure 14, si la taille des données reçues P' est de 10 octets, le procédé selon l'invention isole dans P' un ensemble de données de 2 octets qu'il adjoint au padding de 6 octets pour obtenir un bloc P'c de 8 octets et un bloc restant P'nc de 6 octets.

## Revendications

1. Procédé de sécurisation de données transmises à un ensemble électronique sous forme chiffrée en plusieurs étapes sous forme de blocs **caractérisé en ce qu'**il consiste, lorsque ledit ensemble reçoit un bloc, à déchiffrer le bloc reçu, à traiter les informations contenues dans ledit bloc et à chiffrer les informations traitées.

2. Procédé selon la revendication 1, **caractérisé en ce que** le traitement des informations comprend une étape d'extraction d'informations utiles, seules lesdites informations utiles étant chiffrées.

3. Procédé selon la revendication 2, **caractérisé en ce que** le traitement comprend une étape de segmentation de ladite information utile en segments dits segments utiles dont la taille est compatible avec un algorithme de chiffrement utilisé par ledit objet pour chiffrer ladite information utile segmentée et éventuellement en un segment dit segment restant dont la taille est inférieure à ladite taille compatible, la taille de ladite information utile n'étant pas un multiple de ladite taille compatible.

4. Procédé selon la revendication 3, **caractérisé en ce que** les informations traitées chiffrées sont constituées par les segments utiles.

5. Procédé selon l'une des revendications 3 ou 4, **caractérisé en ce que** le segment restant n'est pas chiffré et est adjoint aux informations utiles extraites du bloc reçu suivant.

6. Procédé selon l'une des revendications 1 à 5, **caractérisé en ce que** le traitement comprend le calcul d'un padding à adjoindre aux informations utiles extraites, la segmentation étant alors réalisées sur l'ensemble des informations utiles adjointes au padding.

7. Procédé selon l'une des revendications 1 à 6, **caractérisé en ce que** le traitement des informations commence par une étape d'inversion du bloc reçu.

8. Dispositif de sécurisation d'un ensemble électronique comportant des moyens de réception de données, des moyens de traitement desdites données reçues comprenant des moyens de chiffrement et déchiffrement, des moyens de mémorisation **caractérisé en ce que** les moyens de réception transmettent des données reçues sous forme de blocs auxdits moyens de traitement et **en ce que** lesdits moyens de traitement déchiffrent un bloc reçu, traitent les informations contenues dans ledit bloc et chiffrent les informations traitées dudit bloc.

9. Ensemble électronique **caractérisé en ce qu'**il est pourvu d'un dispositif de sécurisation selon la revendication 8.

10. Programme comprenant des instructions de code de programme pour l'exécution des étapes du procédé selon l'une des revendications 1 à 7 lorsque ledit programme est exécuté dans un ensemble électronique.
